# EUROPÄISCHE PATENTSCHRIFT

(11) **EP 0 624 222 B1**
(45) Veröffentlichungstag und Bekanntmachung des Hinweises auf die Patenterteilung: **17.10.2001**
(21) Anmeldenummer: 93924607.0
(22) Anmeldetag: 10.11.1993
(51) Int. Cl.: E05D 5/02, F16B 41/00

(54) **BEFESTIGUNGSBOHRUNG IN BESCHLAGTEILEN, INSBESONDERE IN METALLISCHEN MÖBELBESCHLÄGEN**
SECURING HOLE IN FITTINGS, ESPECIALLY METAL FURNITURE FITTINGS
TROU DE FIXATION DANS DES GARNITURES, NOTAMMENT DANS DES GARNITURES METALLIQUES POUR MEUBLES

(30) Priorität: 17.11.1992 DE 4238792
(43) Veröffentlichungstag der Anmeldung: 17.11.1994
(73) Patentinhaber: MEPLA-WERKE LAUTENSCHLÄGER GmbH & Co. KG, D-64354 Reinheim (DE)
(72) Erfinder: LAUTENSCHLÄGER, Gerhard, D-64395 Brensbach-Wersau (DE)
(74) Vertreter: Helber, Friedrich G., Dipl.-Ing.
(86) Internationale Anmeldenummer: EP9303138
(87) Internationale Veröffentlichungsnummer: WO9411604

(56) Entgegenhaltungen:
- EP-A- 0 088 428
- DE-A- 3 622 001

## Beschreibung

Die Erfindung betrifft ein Verfahren zur Herstellung einer mit einem Gegengewinde versehenen Befestigungsbohrung in einem Beschlagteil aus dünnem Metallblech, insbesondere einem Möbelbeschlagteil, in welcher ein mit Gewinde versehener Abschnitt des Schafts einer mit einem kegelstumpfförmigen Senkkopf versehenen Befestigungsschraube vormontierbar ist, deren Schaft zwischen dem mit Gewinde versehenen Abschnitt und dem Senkkopf einen gewindelosen Abschnitt aufweist.

Bei durch Befestigungsschrauben an Möbelstücken zu befstigenden Beschlägen, z.B. Montageplatten für Möbelscharniere, ist es üblich, die Befestigungsschrauben am Beschlagteil vorzumontieren so daß bei der Montage an einer Möbelwand der Beschlag lediglich an der vorgesehenen Montagestellung in Ausrichtung seiner vormontierten Befestigungsschrauben zu den Vorbohrungen im Möbelstück aufgesetzt werden und die Befestigungsschrauben dann mittels eines Schraubwerkzeugs eingedreht werden müssen. Um eine hinreichende Beanspruchbarkeit der Schraubverbindung zu erhalten, werden Schrauben mit relativ grobem Gewinde verwendet, wofür in jüngerer Zeit zunehmend sogenannte "Euro-Schrauben" als Befestigungsschrauben Verwendung finden, deren Gewindeschaft ein relativ grobes Spitzgewinde aufweist, welches sich einerseits mit vergleichsweise geringer Drehkraft in Bohrungen in Holzwerkstoffen eindrehen läßt, dabei durch die vergleichsweise große Eindringtiefe der Gewindegänge in die Bohrungswandung jedoch hoch belastbar ist und auch eine mehrfache Montage und Demontage von Beschlägen erlaubt. Damit die vormontierten Befestigungsschrauben auch bei achtloser Handhabung sicher in der Vormontagestellung gehalten sind, d.h. weder verloren gehen noch aus der rechtwinklig zur Beschlagteil-Oberfläche ausgerichteten Stellung verkantet werden können, muß zwischen dem im Beschlagteil gehaltenen Vorderende des Schraubenschafts und der Befestigungsbohrung eine relativ feste Passung vorgesehen werden, was bei dickwandigen Beschlagteilen dadurch verwirklicht wurde (DE-A- 3 444 851), daß der lichte Abstand zwischen den den Befestigungsschrauben-Schaft haltenden Wänden der Befestigungsbohrung mit leichtem Untermaß gegenüber dem Außendurchmesser des Gewindeschafts der Befestigungsschraube hergestellt wurde, wodurch die Spitzen der Gewindegänge bei der Vormontage leicht in die Bohrungswandung eindringen und sich sozusagen selbst ein Haltegewinde mit niedriger Gangtiefe schneiden. Bei Beschlägen aus dünnem Metallblech, bei denen die Befestigungsbohrung also nur eine so geringe Länge hat, daß ein die Schraube sicher haltender Gewindegang praktisch gar nicht erzeugt werden kann, wurde demgegenüber eine Lösung gefunden (DE-A- 3 622 001), bei welcher aus dem an die Vorbohrung oder - hier richtiger - Ausstanzung anschließenden Materialbereich ein sich etwa über 270° erstreckender ringförmiger Bereich freigestanzt und entsprechend der Steigung des Befestigungsgewindes aus der Blechebene heraus verformt wurde. Dadurch wird also ein entsprechender Gewindegang gebildet, der ausreicht, um die Befestigungsschraube, insbesondere die oben erwähnten Euro-Schrauben, sicher in der Ausstanzung zu halten. Allerdings muß für den aus der Materialebene herausgeformten Gewindegang ein entsprechender Freiraum zur Verfügung stehen, d.h. derartige Blech-Beschläge müssen zumindest im Bereich der zur Befestigung dienenden Ausstanzungen zur Bildung des erforderlichen Hohlraums hochgeprägt sein. Beim Einschrauben der Befestigungsschrauben in die zugehörige Befestigungsbohrung kommt dann der im Bereich des an den Schraubenkopf anschließenden oberen Endes des Gewindeschafts befindliche gewindelose Schaftabschnitt mit einem gegenüber dem Außendurchmesser der Gewindegänge verringerten Durchmesser in den Bereich des freigestanzten Gewindegangs und die Schraube kann sich dann ohne Verkeilung frei drehen, d.h. der Beschlagteil kann in der erforderlichen Weise fest auf die zugehörige Möbelwand aufgeschraubt werden.

Eine andere bekannte Lösung zur Vormontage von Befestigungsschrauben in Befestigungsplatten von Möbelbeschlagteilen aus Metallblech (EP-A- 0 088 428), bei welcher die Befestigungsplatte im Bereich der die Befestigungsschraube aufnehmenden Befestigungsbohrung ebenfalls hochgeprägt ist, d.h. Abstand von der Befestigungsfläche auf dem zugehörigen Möbelstück hat, wird die Befestigungsbohrung in einem hülsenartigen, in den Hohlraum zurückgeprägten Ansatz gebildet, der durch wenigstens drei in gleichmäßigen Winkelabständen vorgesehene Einziehungen eine vom Kreisquerschnitt abweichende Querschnittsform aufweist. Die Einziehungen sind dabei so bemessen, daß die Gewindegänge des Schafts der zugehörigen Befestigungsschraube gerade in sie einschneiden, wodurch die vormontierte Befestigungsschraube gehalten wird.

Aus der DE-A- 1 904 950 ist ein als Montageplatte für Möbelscharniere bestimmter dickwandiger Beschlagteil aus Metall bekannt, der mit einer mit Gewinde versehenen Befestigungsbohrung versehen ist, in welches ein mit Gewinde versehener Abschnitt des Schafts einer Senkkopf-Befestigungsschraube einschraubbar ist. Das Gewinde in der Befestigungsbohrung ist dabei für den Fall vorgesehen, daß die Montageplatte im sogenannten Zwillingsanschlag, d.h. in Ausrichtung mit einer identischen, auf der gegenüberliegenden Seite einer Möbelwand vorgesehenen Montageplatte montiert werden soll. Dann können die beiden Montageplatte mittels einer gemeinsamen, eine Bohrung in der Möbelwand durchsetzenden Befestigungsschraube montiert werden, wobei die Befestigungsschraube zunächst durch das Gewinde der Befestigungsbohrung in der einen Montageplatte hindurch geschraubt und durch die Bohrung in der Tragwand hindurch in die Gewindebohrung der gegenüberliegenden Montageplatte geschraubt wird. Damit ein spielloses festes Zusammenspannen der beiden Montageplatten auf den gegenüberliegenden Seiten der Tragwand möglich ist, weist die Befestigungsschraube im Anschluß an ihren Senkkopf eine gewindelosen Schaftabschnitt verringerten Durchmessers auf, der länger als das in der Montageplatte vorgesehene Gewinde ist, so daß sich dieser gewindelose Schaftabschnitt beim Einschrauben des vorderen, mit Gewinde versehenen Abschnitts in die Befestigungsbohrung der gegenüberliegenden Montageplatte frei in der zugeordneten Befestigungsbohrung drehen kann.

Der Erfindung liegt die Aufgabe zugrunde, ein Verfahren zur Herstellung einer Befestigungsbohrung in einem Beschlagteil aus Metallblech anzugeben, bei welcher die Befestigungsbohrung zur Aufnahme des Senkkopfs einer Befestigungsschraube geeignet ausgebildet ist, wobei der betreffende Beschlagteil aber ohne Freistellung im Bereich der Befestigungsbohrung in dichte Anlage seiner Unterseite an die Möbelwandung anpreßbar sein soll. Dabei soll der mit der in Frage stehenden Befestigungsbohrung versehene Beschlagteil auch ohne Vormontage und mit Schrauben mit abweichender Gewindeausgestaltung bzw. geringerem Schaftdurchmesser montierbar sein, sofern deren Senkkopf in die Ansenkung der Befestigungsbohrung paßt.

Erfindungsgemäß wird diese Aufgabe dadurch gelöst, daß in einem ebenflächigen Metall-Rohzuschnitt des Beschlagteils im Bereich der herzustellenden Befestigungsbohrung zunächst eine Bohrung geringen Durchmessers eingestanzt und der an die Bohrung anschließende Bereich des Metallblechs dann zu einem zylindrischen, von der Oberseite des Metallblech-Zuschnitts vortretenden Ansatz hochgepreßt wird, dessen lichter Innendurchmesser im wesentlichen gleich dem lichten Innendurchmesser eines späteren zylindrischen Bohrungsabschnitts ist, der seinerseits etwas kleiner als der über die Gewindegänge der Befestigungsschraube gemessene Außendurchmesser des Schraubenschafts ist, und daß dann zumindest ein Teil des über die Oberfläche des Metallblech-Zuschnitts vortretenden Teils des zylindrischen Ansatzes mittels eines in dessen Inneres eingepreßten Stempels mit kegeligen Preßflächen komplementär kegelstumpfförmig zum Kopf der Befestigungsschraube aufgeweitet wird, worauf schließlich in den verbleibenden zylindrischen Bohrungsabschnitt mit einer in Einschraubrichtung kürzer bemessenen Länge als der unterhalb des Senkkopfs anschließende gewindelose Schaftabschnitt der Befestigungsschraube das Gegengewinde eingearbeitet wird.

Das Gewinde kann entweder spanlos oder aber auch spanend in den zylindrischen Bohrungsabschnitt eingearbeitet bzw. eingeschnitten werden.

Die Erfindung ist in der folgenden Beschreibung in Verbindung mit der Zeichnung näher erläutert, und zwar zeigt:
- Fig. 1: eine Schnittansicht durch eine nach dem erfindungsgemäßen Verfahren in einem Beschlagteil aus dünnem Metallblech vorgesehenen Befestigungsbohrung in gegenüber der Originalgröße solcher Beschlagteile erheblich vergrößertem Maßstab;
- Fig. 2: eine der Figur 1 entsprechende Schnittansicht, in welcher zusätzlich strichpunktiert eine Zwischenstufe bei der Herstellung der Befestigungsbohrung veranschaulicht ist; und
- Fig. 3: eine Seitenansicht einer in der in der erfindungsgemäßen Weise hergestellten Befestigungsbohrung vormontierbaren Senkkopf-Befestigungsschraube in gegenüber der Darstellung der Figur 1 und 2 etwas verkleinertem, jedoch noch über der Originalgröße liegendem Maßstab.

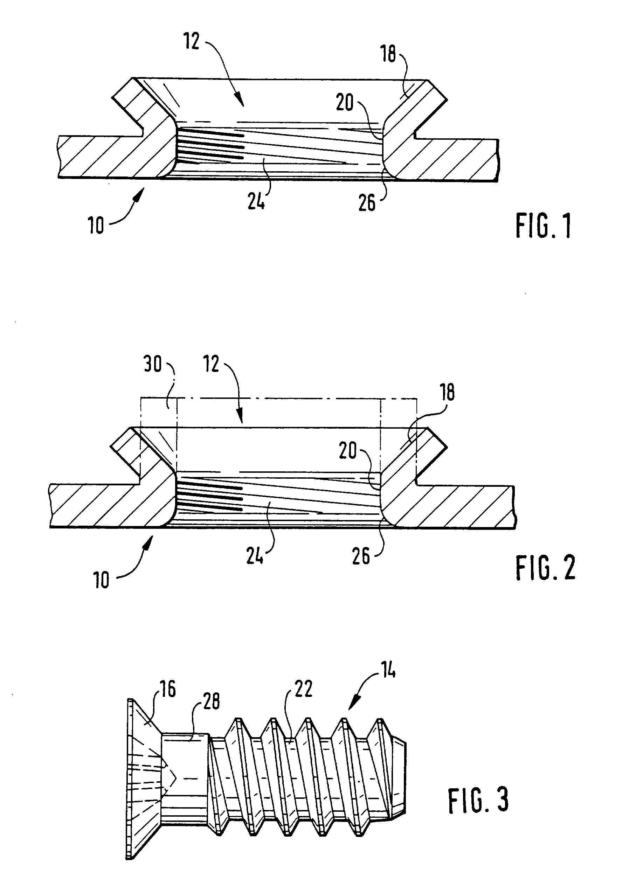

In Figur 1 und 2 ist ein im Maßstab erheblich vergrößerter Teilabschnitt eines Beschlagteils 10 aus Stahlblech mit einer in der erfindungsgemäßen Weise hergestellten Befestigungsbohrung 12 für eine Senkkopf-Befestigungsschraube 14 (Fig. 3) gezeigt. Die Befestigungsbohrung 12 weist eine dem Senkkopf 16 der Befestigungsschraube 14 in der ganz in die Befestigungsbohrung einer nicht gezeigten Möbelwand eingeschraubten Befestigungsstellung passend aufnehmende Ansenkung 18 auf, an welche sich ein grundsätzlich zylindrischer Bohrungsabschnitt 20 anschließt, in welchen aber ein zum Gewinde des mit Gewinde versehenen Abschnitts 22 des Schafts der Befestigungsschraube 14 komplementäres Gegengewinde 24 - spanlos oder spanend - eingebracht ist. An den mit dem Gegengewinde 24 versehenen zylindrischen Abschnitt 20 schließt sich dann ein sich wieder erweiternder kurzer Bohrungsabschnitt 26 an, dessen Durchmesser sich bis zur ansenkungsabgewandten Unterseite des Beschlagteils auf eine Größe erweitert, die wenigstens gleich bzw. etwas größer als der über die Gewindegänge gemessene Außendurchmesser des Schafts der Befestigungsschraube 14 ist.

Die Längenerstreckung des mit Gewinde versehenen zylindrischen Bohrungsabschnitts ist kleiner als ein zwischen dem Senkkopf 16 und dem mit Gewinde versehenen Abschnitt 22 vorgesehener kurzer gewindeloser Abschnitt 28 des Schafts der Befestigungsschraube 14, dessen Durchmesser außerdem kleiner als der lichte Innendurchmesser des Bohrungsabschnitts 20 ist. Es ist klar, daß eine Vormontage der Befestigungsschraube 16 in der Bohrung 12 dadurch möglich ist, daß das Vorderende des Schafts in das Gegengewinde 24 des Bohrungsabschnitts 20 eingeschraubt wird. Zwischen dem Gewinde der Befestigungsschraube und dem Gegengewinde 24 ist eine leichte Preßpassung vorgesehen, welche die vormontierte Befestigungsschraube 14 sicher in der Bohrung 12 hält, bis sie bei der Montage in eine Vorbohrung im Untergrund eingeschraubt wird.

Figur 2 entspricht der Figur 1, wobei allerdings strichpunktiert eine Zwischenstufe des Beschlagteils 10 bei der Herstellung der Befestigungsbohrung 12 veranschaulicht ist. Die Ansenkung 18 wird nämlich aus einem zunächst durch Ausstanzen einer Bohrung und Umformen des die Bohrung umgebenden Materialbereich hergestellten zylindrischen Ansatzes 30 gebildet, wobei dieses Umformen dadurch geschieht, daß in den zylindrischen Ansatz 30 von oben ein Preßstempel mit einer der Ansenkung komplementär entsprechenden kegeligen Preßfläche eingepreßt wird. Der ursprünglich zylindrische Ansatz 30 wird dadurch zu dem in den Zeichnungsfiguren 1 und 2 erkennbaren, sich erweiternden Ansatz umgeformt. Das Gegengewinde wird dann anschließend entweder spanlos durch Eindrehen eines entsprechenden Gewindedorns oder spanend mittels eines Gewindeschneiders in den zylindrischen Abschnitt 20 eingebracht.

Es ist ersichtlich, daß im Rahmen des Erfindungsgedankens Abwandlungen und Weiterbildungen der beschriebenen Ausführungsbeispiele verwirklichbar sind. Darauf hinzuweisen ist, daß die im dargestellten Fall für die Vormontage von sogenannten "Euro-Schrauben" bestimmten Bohrungen bei entsprechender maßlicher Anpassung auch so umgestaltet werden können, daß normale Holzschrauben oder auch sogenannte Spanplatten- oder Spax-Schrauben vormontiert werden können. Andererseits können Beschlagteile mit den beschriebenen und in den Zeichnungsfiguren dargestellten Befestigungsbohrungen auch mit Senkkopf-Holzschrauben oder Spanplatten- oder Spax-Schrauben befestigt werden. Da der Senkkopf der letzterwähnten Schrauben im Verhältnis zum Schaftdurchmesser deutlich größer als der Senkkopf 16 der in Figur 3 gezeigten Euro-Schrauben ist, ist also der Schaftdurchmesser einer für die Befestigungsbohrung 12 geeigneten Holzschraube deutlich kleiner als der Schaftdurchmesser der Befestigungsschraube 14, so daß der Gewindeschaft ohne Schwierigkeiten durch den mit dem Gegengewinde 24 versehenen Bohrungsabschnitt 20 hindurchführbar ist. Eine Vormontage dieser Schrauben mit geringerem Schaftdurchmesser ist dann allerdings nicht möglich.

## Patentansprüche

1. Verfahren zur Herstellung einer mit einem Gegengewinde (24) versehenen Befestigungsbohrung (12) in einem Beschlagteil (10) aus dünnem Metallblech, insbesondere einem Möbelbeschlagteil, in welcher ein mit Gewinde versehener Abschnitt (22) des Schafts einer mit einem kegelstumpfförmigen Senkkopf (16) versehenen Befestigungsschraube (14) vormontierbar ist, deren Schaft zwischen dem mit Gewinde versehenen Abschnitt (22) und dem Senkkopf (16) einen gewindelosen Abschnitt (28) aufweist,
**dadurch gekennzeichnet,**
**daß** in einem ebenflächigen Metallblech-Rohzuschnitt des Beschlagteils (10) im Bereich der herzustellenden Befestigungsbohrung (12) zunächst eine Bohrung geringen Durchmessers eingestanzt und der an die Bohrung anschließende Bereich des Metallblechs dann zu einem zylindrischen, von der Oberseite des Metallblech-Zuschnitts vortretenden Ansatz (30) hochgepreßt wird, dessen lichter Innendurchmesser im wesentlichen gleich dem lichten Innendurchmesser eines späteren zylindrischen Bohrungsabschnitts (20) ist, der seinerseits etwas kleiner als der über die Gewindegänge der Befestigungsschraube (14) gemessene Außendurchmesser des Schraubenschafts ist, und daß dann zumindest ein Teil des über die Oberfläche des Metallblech-Zuschnitts vortretenden Teils des zylindrischen Ansatzes (30) mittels eines in dessen Inneres eingepreßten Stempels mit kegeligen Preßflächen komplementär kegelstumpfförmig zum Kopf der Befestigungsschraube (14) aufgeweitet wird, worauf schließlich in den verbleibenden zylindrischen Bohrungsabschnitt (20) mit einer in Einschraubrichtung kürzer bemessenen Länge als der unterhalb des Senkkopfs anschließende gewindelose Schaftabschnitt der Befestigungsschraube das Gegengewinde (24) eingearbeitet wird.

2. Verfahren nach Anspruch 1, **dadurch gekennzeichnet, daß** das Gegengewinde (24) spanlos in den zylindrischen Bohrungsabschnitt (20) eingearbeitet wird.

3. Verfahren nach Anspruch 1, **dadurch gekennzeichnet, daß** das Gegengewinde (24) spanend in den zylindrischen Bohrungsabschnitt (20) eingeschnitten wird.

## Claims

1. Method of producing a fastening bore (12), provided with a complementary screw thread (24), in a fitting (10) of thin metal plate, particularly a furniture fitting, in which a threaded section (22) of the shaft of a fastening screw provided with a frusto-conical flat head (16) may be pre-installed, the shaft of which has an unthreaded section (28) between the threaded section (22) and the flat head (16), **characterised in that** a bore of small diameter is firstly stamped in a flat metal plate blank of the fitting (10) in the region of the fastening bore (12) to be produced and the region of the metal plate adjacent to the bore is then pressed up to form a cylindrical projection (30) projecting from the surface of the metal plate blank, the free internal diameter of which is substantially equal to the free internal diameter of a subsequent cylindrical bore section (20), which for its part is somewhat smaller than the external diameter of the screw shaft measured over the threads of the fastening screw (40), and that at least a proportion of the portion of the cylindrical projection (30) projecting beyond the surface of the metal plate blank is expanded to the frusto-conical shape complementary to the head of the fastening screw (14) by means of a die with conical pressing surfaces forced into its interior, whereafter finally the complimentary thread (24) is worked into the remaining cylindrical bore section (20) with a length in the insertion direction which is shorter than the adjoining unthreaded shaft section of the fastened screw below the flat head.

2. Method as claimed in claim 1, **characterised in that** the complementary thread (24) is worked into the cylindrical bore section (20) in a non-cutting manner.

3. Method as claimed in claim 1, **characterised in that** the compleentary thread (24) is cut into the cylindrical bore section (20).

## Revendications

1. Procédé de réalisation d'un alésage de fixation (12) pourvu d'un contre-taraudage (24) dans une partie de garniture (10) en tôle métallique mince, en particulier une garniture de meuble, alésage dans lequel peut être prémontée une partie filetée (22) de la tige d'une vis de fixation (14) pourvue d'une tête fraisée tronconique (16) et dont la tige présente une partie non filetée (28) entre la partie filetée (22) et la tête fraisée (16),
**caractérisé par le fait que**
dans un flan brut en tôle métallique plan de la partie de garniture (10), dans la zone de l'alésage de fixation (12) à réaliser est d'abord découpé un alésage de petit diamètre, et la partie de la tôle métallique contiguë à cet alésage est ensuite relevée en un appendice cylindrique (30) saillant de la face supérieure du flan en tôle métallique et dont le diamètre intérieur est sensiblement égal au diamètre intérieur d'une partie de l'alésage cylindrique ultérieure (20), qui est lui-même un peu plus petit que le diamètre extérieur de la tige de la vis de fixation (14) mesuré sur les filets de celle-ci, et qu'ensuite, au moins une portion de la partie de l'appendice cylindrique (30) qui fait saillie de la face supérieure du flan en tôle métallique est, au moyen d'un poinçon à surfaces actives coniques enfoncé dans l'appendice, évasée de façon à avoir une forme tronconique complémentaire de celle de la tête de la vis de fixation (14), après quoi, enfin, le contre-taraudage (24) est réalisé dans la partie de trou cylindrique restante (20) ayant une longueur mesurée dans la direction de vissage plus courte que celle de la partie de tige non filetée de la vis de fixation située sous la tête fraisée.

2. Procédé selon la revendication 1, **caractérisé par le fait que** le contre-taraudage (24) est réalisé dans la partie de trou cylindrique (20) sans enlèvement de matière.

3. Procédé selon la revendication 1, **caractérisé par le fait que** le contre-taraudage (24) est taillé dans la partie de trou cylindrique (20) avec enlèvement de matière.
